# EUROPEAN PATENT APPLICATION

(11) **EP 4 335 877 A1**
(43) Date of publication of application: **13.03.2024**
(21) Application number: 22194791.4
(22) Date of filing: 09.09.2022
(51) Int. Cl.: C08F 2/00, C08F 2/34, C08F 10/00

(54) **CONTINUOUS OLEFIN POLYMERIZATION PROCESS IN THE PRESENCE OF AN ANTISTATIC AGENT**

(71) Applicant: Basell Polyolefine GmbH, 50389 Wesseling (DE)
(72) Inventor: MEI, Giulia, 44122 Ferrara (IT); MEI, Gabriele, 44122 Ferrara (IT); MAZZUCCO, Antonio, 44122 Ferrara (IT); MARTURANO, Lorella, 44122 Ferrara (IT); CAPUTO, Tiziana, 44122 Ferrara (IT); CAPISANI, Paolo, 44122 Ferrara (IT); SESSA, Stefano, 44122 Ferrara (IT); BAITA, Pietro, 44122 Ferrara (IT); MEIER, Gerhardus, 60320 Frankfurt / M (DE); SCHUELLER, Ulf, 64331 Weiterstadt (DE); WILHELM, Sebastian, 55252 Mainz (DE)
(74) Representative: LyondellBasell

(57) **Abstract**

A process for the continuous production of a polyolefin polymer in a gas-phase polymerization reactor in the presence of a polymerization catalyst and an antistatic agent comprising the steps of providing a mixture of polyolefin particles and gas conveying said mixture through a pipe at a gas velocity of more or equal than 2 m/s; and introducing an antistatic agent into said mixture.

## Description

### FIELD OF THE DISCLOSURE

The present disclosure relates to a process for the continuous production of a polyolefin polymer in a gas-phase polymerization reactor in the presence of a polymerization catalyst and an antistatic agent as well as an apparatus for carrying out said process.

### BACKGROUND OF THE DISCLOSURE

During production of polymers, the polymer particles show a tendency to stick to the reactor walls due to a high level of electrostatic charges. This not only carries the risk of forming chunks or wall sheeting, which mostly lead to an unavoidable shut-down of the polymerization reactor because of plugging, but also obstructs the fluid-dynamics in the reactor and disturbs fluidization of the polymer particles.

Antistatic agents are therefore used in the processes for the polymerization of olefins to avoid electrostatic charging in order to reduce wall sheeting and formation of polymer agglomerates in the polymerization reactor or in downstream equipment such as degassing and recovery vessels. In the context of polyolefin polymerization, antistatic agents are also referred to as antifouling agents, polymerization process aids, activity inhibitors or kinetic modifiers. The antistatic agent comprises antistatically-acting compounds which have polar functional groups such as acid or ester groups, amine or amide groups or hydroxyl or ether groups. Common examples of antistatically-acting compounds are polysulfone copolymers, polymeric polyamines, polyalcohols, hydroxyesters of polyalcohols, salts of alkylarylsulfonic acids, polysiloxanes, alkoxyamines and polyglycol ethers.

US 5,410,002 describes a polymerization process in which antistatic compounds are used to eliminate or reduce the build-up of polymer particles on the walls of gas-phase polymerization reactors. The compounds employed are believed to be capable of selectively inhibiting the polymerization on polymer particles smaller than 850 µm which were identified as being responsible for fouling problems and polymer sheeting.

In multizone circulating reactors, polymer particles may for example adhere to the walls of the riser and coverage of the wall of the riser is continuously build up. If these agglomerated polymer particles drop at a certain point, the amount of transportable polymer particles in the riser increases abruptly, more polymer is transported to the downcomer and the polymer particle level within the downcomer rises very fast. By the increase of the number of polymer particles within the riser, however, not only the density of the reactor content in the riser changes temporarily but also the fluid-dynamics of the reaction mixture fluctuate. Moreover, the variation of the polymer particle level within the downcomer also influences the fluid-dynamics within the whole multizone circulating reactor. Although several antistatic agents are known to the person skilled in the art to address the problem, antistatic agents are only effective when properly dispersed over the polymer powder.

WO 2017/108337 discloses a process for the preparation of polyolefins, said process comprising the step of polymerizing an olefin in the presence of an antistatic compound comprising a) from 0.5 to 50 % by weight of a compound of formula R-OH wherein R represents hydrogen or a linear or branched, saturated alkyl group having from 1 to 15 carbon atoms; and b) from 50 to 99 % by weight of an oligomeric or polymeric organic compound having one or more terminal hydroxyl groups and a viscosity at 40 °C of at least 20 mm2/sec (DIN 51562). The antistatic compound may be introduced into the reactor at different positions, e.g. directly into the reactor, into the line leading to the reactor, into a line exciting the reactor or in the polymer discharge out of a polymerization reactor.

WO 2016/150997 provides a process for the preparation of polyolefins by polymerizing olefins at temperatures of from 20 to 200 °C and pressures of from 0.1 to 20 MPa in the presence of a polymerization catalyst in a polymerization reactor, wherein the polymerization is carried out in the presence of an antistatic agent comprising an alkylene oxide derived polymer comprising in average from 10 to 200 repeating units -(CH₂-CHR-O)- with R being hydrogen or an alkyl group having from 1 to 6 carbon atoms, wherein the alkylene oxide derived polymer is a random copolymer of ethylene oxide and other alkylene oxides and a ratio n:m of repeating units -(CH₂-CH₂-O)- derived from ethylene oxide to repeating units -(CH₂CHR'-O)- derived from the other alkylene oxides with R' being an alkyl group having from 1 to 6 carbon atoms is in the range of from 6:1 to 1:1, and all end groups of the alkylene oxide derived polymer are - OH groups. It is recommended to introduce the antistatic agent directly into the reactor or into a line leading to the reactor.

WO 2009/010413 describes a process for the polymerization of olefins comprising: a) polymerizing at least one liquid olefin monomer in a polymerization reactor to form a polymerization slurry comprising a polyolefin and said liquid monomer; b) continuously transferring the polymerization slurry from the polymerization reactor to a flash chamber by means of a transfer line comprising a pipe where a turbulent flow of a tri-phase stream comprising polymer, liquid monomers and gaseous monomers is established; c) separating the evaporated monomer from the polymer in said flash chamber; the process being characterized in that an anti-fouling agent in a liquid form is continuously introduced upstream in the inlet of said pipe in step b).

Antistatic agents used in the continuous polymerization of olefins often not only have the desired antistatic effect but also negatively impact the activity of virtually all olefin polymerization catalysts. Furthermore, their efficiency is limited; that means even if these antistatic agents are added to the polymerization, there are still sometimes issues regarding sheeting and lump formation because of electrostatic charging for certain products, especially for preparing polyolefins with relatively high molecular weights. Furthermore, a long-term reliable operation of the polymerization reactors should be ensured.

Thus, there is a need to provide a polymerization process which not only prevents the formation of wall sheeting and polymer agglomerates in the polymerization reactor but also provides good operability of the polymerization process.

### SUMMARY OF THE DISCLOSURE

The present disclosure provides a process for the continuous production of a polyolefin polymer in a gas-phase polymerization apparatus at temperatures from 20 to 200 °C and pressures from 0.5 to 10 MPa in the presence of a polymerization catalyst, the process comprising the steps of:
- providing a mixture of polyolefin particles and gas;
- conveying said mixture through a pipe at a gas velocity of more or equal than 2 m/s; and
- introducing an antistatic agent into said mixture.

In some embodiments, the mixture is conveyed through the pipe at a gas velocity of less or equal than 50 m/s, preferably less or equal than 40 m/s, more preferably less or equal than 30 m/s and most preferably less or equal than 20 m/s.

In some embodiments, the process is characterized in that the density of the polyolefin particles in the gas is at least 30 kg/m³, preferably at least 50 kg/m³, more preferably at least 80 kg/m³. In some embodiments, the process is characterized in that the density of the polyolefin particles in the gas is at most 200 kg/m³.

In some embodiments, the process is characterized in that the pipe is a discharge line and/or transfer line.

In some embodiments, the process is characterized in that the process further comprises the steps of
- feeding an olefin or an olefin and one or more other ethylenically unsaturated monomers into a gas-phase polymerization reactor;
- homopolymerizing the olefin or copolymerizing the olefin and the one or more other ethylenically unsaturated monomer in the gas-phase reactor in the presence of a polymerization catalyst;
- discharging the formed polyolefin particles from the gas-phase reactor.

In some embodiments, the process is characterized in that the gas-phase polymerization apparatus comprises two or more gas-phase polymerization reactors. In some embodiments the process may be characterized by a sequence of a fluidized bed reactor and a multi zone circulating reactor.

In some embodiments, the process is characterized in that the antistatic agent comprises an alkylene oxide derived polymer. The alkylene oxide derived polymer may in one embodiment comprise in average from 10 to 200 -(CH₂-CHR-O)- with R being hydrogen or an alkyl group having from 1 to 6 carbon atoms, wherein the alkylene oxide derived polymer is a random copolymer of ethylene oxide and other alkylene oxides and a ratio n : m of repeating units - (CH₂-CH₂-O)- derived from ethylene oxide to repeating units -(CH₂-CHR'-O)- derived from the other alkylene oxides with R' being an alkyl group having from 1 to 6 carbon atoms is in the range of from 6 : 1 to 1 : 1, and all end groups of the alkylene oxide derived polymer are -OH groups.

In some embodiments, the process is characterized in that the alkylene oxide derived polymer is a random copolymer of ethylene oxide and propylene oxide. In some embodiments, the alkylene oxide derived polymer may be a linear ethylene oxide/propylene oxide copolymer.

In some embodiments, the process is characterized in that the antistatic agent is introduced into the mixture of gas and polyolefin in a feed of a carrier wherein the weight ratio of antistatic agent to carrier in the combined stream introduced into the pipe is in the range from 1:5000 to 1:10.

In some embodiments, the process is characterized in that the carrier is selected from the group consisting of water, liquid hydrocarbons, preferably those having from 3 to 8 carbon atoms, such as propane.

In some embodiments, the process is characterized in that the polymerization is carried out in a polymerization reactor cascade comprising a fluidized-bed reactor and a multizone circulating reactor, in which multizone circulating reactor the growing polymer flow upward through a first polymerization zone under fast fluidization or transport conditions, leave said first polymerization zone and enter a second polymerization zone through which the particles flow downward under the action of gravity, leave said downcomer and are reintroduced into the riser, thus establishing a circulation of polymer, and the fluidized-bed reactor is arranged upstream of the multizone circulating reactor.

In some embodiments, the process is characterized in that a lower molecular weight polyolefin polymer component is obtained in the fluidized-bed reactor and a higher molecular weight polyolefin polymer component is obtained in the multizone circulating reactor.

In some embodiments, the process is characterized in that the polyolefin polymer is a polyethylene prepared by homopolymerizing ethylene or copolymerizing ethylene and up to 10 wt.%, up to 5 wt.% or up to 3 wt.% of C₃-C₈-1-alkenes.

In a further aspect, the present disclosure provides a gas-phase polymerization apparatus for carrying out the process of the present disclosure, comprising a gas-phase polymerization reactor and at least one pipe, characterized in that the pipe comprises at least one inlet for introducing an antistatic agent into the pipe.

In some embodiments, the apparatus is characterized in that the pipe comprises a receiving end for receiving a mixture of polyolefin particles and gas and a discharge end for discharging a mixture of polyolefin particles and gas wherein the at least one inlet for introducing an antistatic agent into the pipe is located within the first half. The at least one inlet may in some embodiments be arranged within the first third of the pipe from the receiving end of the pipe.

### BRIEF DESCRIPTION OF THE DRAWINGS

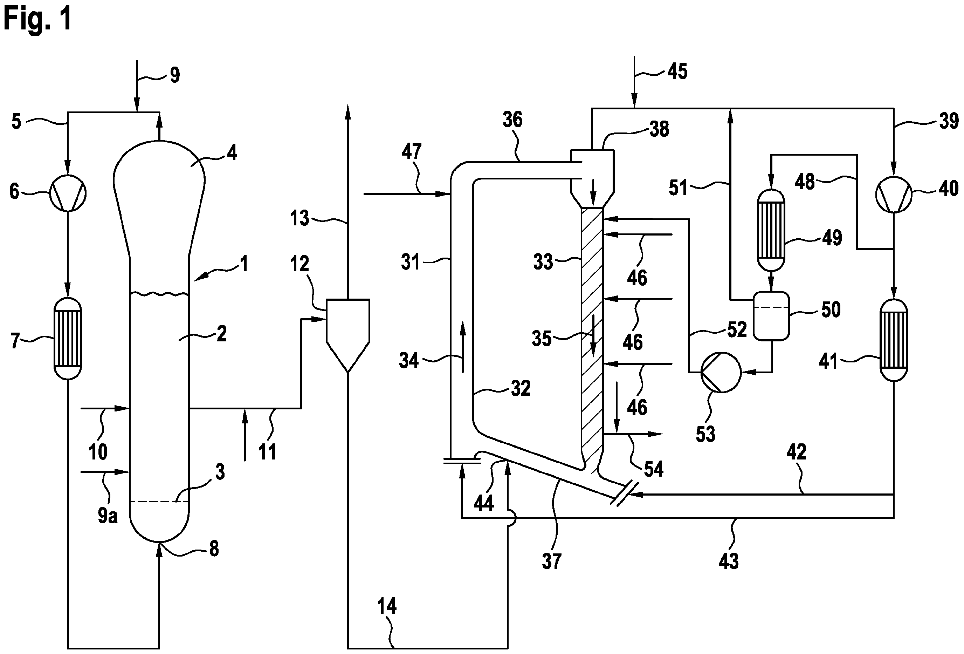

Figure 1 shows schematically an exemplary set-up of a polymerization reactor cascade comprising a fluidized-bed reactor and a multizone circulating reactor for the polymerization process of the present disclosure.

### DETAILED DESCRIPTION OF THE DISCLOSURE

The present disclosure provides a continuous process for the production of a polyolefin, especially for the polymerization of 1 -olefins, i.e. hydrocarbons having terminal double bonds, without being restricted thereto. Monomers can be functionalized olefinically unsaturated compounds such as ester or amide derivatives of acrylic or methacrylic acid, for example acrylates, methacrylates, or acrylonitrile. The monomers may particularly be nonpolar olefinic compounds, including aryl- substituted 1-olefins. Particularly preferred 1 -olefins are linear or branched C₂ -C₁₂ -1-alkenes, in particular linear C₂ -C₁₀ -1-alkenes such as ethylene, propylene, 1-butene, 1-pentene, 1-hexene, 1-heptene, 1-octene, 1-decene or branched C₂ - C₁₀ -1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1 -olefins. The olefins may also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is in particular suitable in the homopolymerization or copolymerization of ethylene or propylene and is especially preferred for the homopolymerization or copolymerization of ethylene. Comonomers in propylene polymerization may for example be up to 40 wt.% of ethylene and/or 1-butene, preferably from 0.5 wt.% to 35 wt.% of ethylene and/or 1-butene based on the total weight of monomers and comonomers. As comonomers in ethylene polymerization, preference is given to using up to 20 wt.%, more preferably from 0.01 wt.% to 15 wt.% and especially from 0.05 wt.% to 12 wt.% of C₃ -C₈ -1-alkenes, in particular 1-butene, 1-pentene, 1-hexene and/or 1-octene based on the total weight of monomers and comonomers. Particular preference is given to a process in which ethylene is copolymerized with from 0.1 wt.% to 12 wt.% of 1 -hexene and/or 1-butene based on the total weight of monomers and comonomers.

The polymerization of olefins is carried out in the presence of a polymerization catalyst. Within the course of the present disclosure, any customary olefin polymerization catalysts can be used.. That means the polymerization can be carried out using Phillips catalysts based on chromium oxide, using titanium-based Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts may be designated as hybrid catalysts. The preparation and use of these catalysts for olefin polymerization are generally known.

Catalysts used for the process of the present disclosure may for example be catalysts of the Phillips type, which may be prepared by applying a chromium compound to an inorganic support and subsequently calcinating this at temperatures in the range from 350 to 950 °C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during calcination. As supports for Phillips catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the element boron, aluminum, silicon or phosphorus. In one embodiment, the support material may be a silica gel. In one embodiment, the silica gels may be spherical or granular silica gels, with the former also being able to be spray dried. The activated chromium catalysts can subsequently be prepolymerized or prereduced. The prereduction may becarried out by means of cobalt or else by means of hydrogen at 250 to 500 °C, preferably at 300 to 400 °C, in an activator.

Catalysts for the process of the present disclosure may also be single-site catalysts. Particularly suitable are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Further preferred catalysts are mixtures of two or more single-site catalysts or mixtures of different types of catalysts comprising at least one single-site catalyst.

Preferred catalysts are further catalysts of the Ziegler type, preferably comprising a compound of titanium or vanadium, a compound of magnesium and optionally an electron donor compound and/or a particulate inorganic oxide as support. It was surprisingly found that those types of catalyst are especially suitable for combination with an antistatic agent, in particular an antistatic agent comprising a copolymer of ethylene oxide and propylene oxide.

As titanium compounds, use can be made of the halides or alkoxides of trivalent or tetravalent titanium, with titanium alkoxy halogen compounds or mixtures of various titanium compounds also being possible. Examples of such titanium compounds are TiBr₃, TiBr₄, TiCl₃, TiCl₄, Ti(OCH₃)Cl₃, Ti(OC₂H₅)Cl₃, Ti(O-*i*-C₃H₇)Cl₃, Ti(O-*n*-C₄H₉)C|₃, Ti(OC₂H₅)Br₃, Ti(O-*n*-C₄H₉)Br₃, Ti(OCH₃)₂Cl₂, Ti(OC₂H₅)₂C|₂, Ti(O-*n*-C₄H9)₂C|₂, Ti(OC₂H₅)₂Br₂, Ti(OCH₃)₃Cl, Ti(OC₂H₅)₃Cl, Ti(O-*n*-C₄H₉)₃Cl, Ti(OC₂H₅)₃Br, Ti(OCH₃)₄, Ti(OC₂H₅)₄ or Ti(O-*n*-C₄H₉)₄. In some embodiments, the titanium compounds may comprise chlorine as the halogen. In some embodiments, the titanium compounds may be titanium halides which comprise only halogen in addition to titanium and among these, especially, titanium chlorides and in particular titanium tetrachloride. Among the vanadium compounds, particular mention may be made of the vanadium halides, the vanadium oxyhalides, the vanadium alkoxides and the vanadium acetylacetonates. In some embodiments, the vanadium compounds may be vanadium compounds in the oxidation states 3 to 5.

In the production of the solid component, at least one compound of magnesium can be additionally used. Compounds of this type may be halogen-comprising magnesium compounds such as magnesium halides and in particular the chlorides or bromides and magnesium compounds from which the magnesium halides can be obtained in a customary way, e.g. by reaction with halogenating agents. For the present purposes, halogens are chlorine, bromine, iodine or fluorine or mixtures of two or more halogens. In some embodiments, the halogens may be chlorine or bromine and in particular chlorine.

Possible halogen-comprising magnesium compounds are in particular magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Halogenating agents may, for example, be halogens, hydrogen halides, SiCl₄ or CCl₄ and in particular chlorine or hydrogen chloride.

Examples of halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyloxy-magnesium, diamyloxymagnesium, n-butyloxyethoxymagnesium, n-butyloxy-sec-butyloxy-magnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amylmagnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alky)magnesium compounds. Preferably, the Ziegler-Natta catalyst comprises a transition metal selected from titanium, zirconium, vanadium, chromium.

Electron donor compounds for preparing Ziegler type catalysts may for example be alcohols, glycols, esters, ketones, amines, amides, nitriles, alkoxysilanes and aliphatic ethers. These electron donor compounds can be used alone or in mixtures with other electron donor compounds.

In some embodiments, alcohols may be those of formula R¹OH in which the R¹ group is a C₁-C₂₀ hydrocarbon group. In some embodiments, R¹ is a C₁-C₂₀-alkyl group. Specific examples are methanol, ethanol, iso-propanol and n-butanol. In some embodiments, the glycols are those having a total number of carbon atoms lower than 50. In some embodiments, the glycols may be 1,2 or 1,3 glycols having a total number of carbon atoms lower than 25. Specific examples are ethylenglycol, 1,2-propylenglycol and 1,3-propylenglycol. In some embodiments, esters are the alkyl esters of C₁-C₂₀ aliphatic carboxylic acids and in particular C₁-C₈-alkyl esters of aliphatic mono carboxylic acids such as ethylacetate, methyl-formiate, ethylformiate, methylacetate, propylacetate, *i*-propylacetate, *n*-butylacetate, *i*-butyl-acetate. In some embodiments, amines are those of formula NR²₃ in which the R² groups are, independently, hydrogen or a C₁-C₂₀-hydrocarbon group with the proviso that the R² groups are not simultaneously hydrogen. Preferably, R² is a C₁-C₁₀ alkyl group. Specific examples are diethylamine, diiso-propylamine and triethylamine. In some embodiments, the amides may be those of formula R³CONR⁴ ₂ in which R³ and R⁴ are, independently, hydrogen or a C₁-C₂₀ hydrocarbon group. Specific examples are formamide and acetamide. In some embodiments, the nitriles are those of formula R¹CN where R¹ has the same meaning given above. A specific example is acetonitrile. In some embodiments, alkoxysilanes are those of formula R⁵ₐR⁶_{b}Si(OR⁷)_{c} , where a and b are integer from 0 to 2, c is an integer from 1 to 4 and the sum (a+b+c) is 4; R⁵, R⁶, and R⁷, are alkyl, cycloalkyl or aryl radicals with 1 -1 8 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such silicon compounds are methyltrimethoxysilane, dimethyldimethoxy- silane, trimethylmethoxysilane and t-butyltrimethoxysilane. In some embodiments, electron donor compounds are selected from the group consisting of amides, esters, and alkoxysilanes.

Catalysts of the Ziegler type may be polymerized in the presence of a cocatalyst. Such cocatalysts may be organometallic compounds of metals of groups 1, 2, 12, 13 or 14 of the Periodic Table of Elements, in particular organometallic compounds of metals of group 13 and especially organoaluminum compounds. In some embodiments, the cocatalysts are for example organometallic alkyls, organometallic alkoxides, or organometallic halides. In some embodiments, organometallic compounds comprise lithium alkyls, magnesium or zinc alkyls, magnesium alkyl halides, aluminum alkyls, silicon alkyls, silicon alkoxides and silicon alkyl halides. In some embodiments, the organometallic compounds may comprise aluminum alkyls and magnesium alkyls. In some embodiments, the organometallic compounds may comprise aluminum alkyls, such as trialkylaluminum compounds. The aluminum alkyls may comprise, for example, trimethyl- aluminum, triethylaluminum, tri-iso-butylaluminum, tri-n-hexylaluminum and the like.

The obtained polyolefin particles have a more or less regular morphology and size, depending on the catalyst morphology and size, and on polymerization conditions. Depending on the catalyst used, the polyolefin particles usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 500 to about 3000 µm.

The process of the present disclosure is carried out as gas-phase polymerization, i.e. by a process in which the solid polymers are obtained from a gas-phase of the monomer or the monomers. Such gas-phase polymerizations may be carried out at pressures of from 0.1 to 20 MPa, preferably from 0.5 to 10 MPa and in particular from 1.0 to 5 MPa and polymerization temperatures from 40 to 150 °C and preferably from 65 to 125 °C.

The process of the present disclosure may be for example carried out in an apparatus comprising two or more gas-phase polymerization reactors, in particular a sequence of a fluidized bed reactor and a multizone circulating reactor.

Fluidized-bed polymerization reactors are reactors in which the polymerization takes place in a bed of polymer particles which is maintained in a fluidized state by feeding in gas at the lower end of a reactor, usually below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is usually a mixture of the olefins to be polymerized, inert gases such as nitrogen and/or lower alkanes such as ethane, propane, butane, pentane or hexane and optionally a molecular weight regulator such as hydrogen. The use of nitrogen or propane as inert gas, if appropriate in combination with further lower alkanes, is preferred. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, such as in the upper part of the downcomer. The barrier fluid should have a composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore, it is also possible to introduce make-up monomers, comonomers, molecular weight regulator such as hydrogen and/or inert fluids at any point of the downcomer, in particular below the barrier feeding point. Thus, it is also easily possible to create varying monomer, comonomer and hydrogen concentrations along the downcomer resulting in a further differentiation of the polymerization conditions.

In case of being carried out in two or more gas-phase polymerization reactors, the process of the present disclosure may further comprise a step of transferring the polymer particles from one reactor to the other. In order to avoid agglomeration or clogging of the line, the antistatic agent may be directly introduced into the transfer line.

In an exemplary embodiment of the present disclosure, the fluidized-bed reactor is arranged upstream of the multizone circulating reactor. Such a reactor cascade of gas-phase reactors may also further comprise additional polymerization reactors. These additional reactors can be any kind of low- pressure polymerization reactors such as gas-phase reactors or suspension reactors and may also include a pre-polymerization stage.

In an exemplary embodiment, the process of the present disclosure thus further comprises the steps of
- feeding an olefin or an olefin and one or more other ethylenically unsaturated monomers into a gas-phase polymerization reactor;
- transferring the polymer particles from one gas-phase reactor to another gas-phase reactor
- discharging the formed polyolefin particles from the gas-phase reactor.

The antistatic agent of the present disclosure can be introduced into the reactor with the aid of customary methods. The feeding can occur directly into the reactor or into a line leading to the reactor. Within the course of the present disclosure, it was surprisingly found that in addition to position of introducing the antistatic agent into the mixture of polyolefin particles and gas, the gas velocity is also critical when it comes to effectively distributing the antistatic agent for maximum effect. Thus, the mixture of polyolefin particles and gas is conveyed through the polymerization apparatus at a velocity of more or equal than 2 m/s, preferably more or equal than 2.5 m/s.

The way the antistatic agent is introduced into the polymerization reactor may vary depending on the polymer produced. In case of polyethylene production, the antistatic agent may for example be introduced into the polymerization reactor by a stream of a liquid carrier. The stream of liquid carrier, also known as pick-up stream, may be a stream of liquid hydrocarbons, such as those having 3 to 8 carbons, such as propane. In some embodiments, the weight ratio of antistatic agent to liquid carrier in the combined stream, which is introduced into the reactor, is less than 1:5, more preferably the weight ratio of antistatic agent to liquid carrier in the combined stream is in the range from 1:5000 to 1:10, even more preferably in the range from 1:2000 to 1:20, and most preferably in the range from 1:1000 to 1:50. In some embodiments, the combined feed stream comprising liquid carrier and antistatic agent does not contain organoaluminum compounds such as aluminum alkyls. In a preferred embodiment of the present disclosure, the feed line for introducing the combined feed stream comprising liquid carrier and antistatic agent into the gas-phase polymerization reactor is equipped with a static mixer and the combined feed stream passes the static mixer before being introducing into the gas-phase polymerization reactor.

In an alternative embodiment, the antistatic agent is introduced together with monomer and/or comonomer stream.

According to an exemplary embodiment of the present disclosure, the polymerization is a gas-phase polymerization and the antistatic agent is introduced into the gas-phase polymerization reactor by feeding the antistatic agent to a part of the reactor where the density of solid polymer particles is at least 30 kg/m³, preferably at least 50 kg/m³, and more preferably at least 80 kg/m³. In some embodiments, parts of gas-phase polymerization reactors, to which the antistatic agent may be fed, are, for instance, those parts which contain a stirred or fluidized bed of polymer particles. Other parts of gas-phase polymerization reactors, to which the antistatic agent can be fed according to this embodiment, are a riser or a downcomer of a multizone circulating reactor.

The antistatic agent employed in the process of the present disclosure may comprise an alkylene oxide derived polymer. The alkylene oxide derived polymer may in one embodiment comprise in average from 10 to 200 repeating units -(CH₂-CHR-O)- with R being hydrogen or an alkyl group having from 1 to 6 carbon atoms, wherein the alkylene oxide derived polymer is a random copolymer of ethylene oxide and other alkylene oxides and a ratio n : m of repeating units -(CH₂-CH₂-O)- derived from ethylene oxide to repeating units -(CH₂-CHR'-O)- derived from the other alkylene oxides with R' being an alkyl group having from 1 to 6 carbon atoms is in the range of from 6 : 1 to 1 : 1, and all end groups of the alkylene oxide derived polymer are -OH groups.

In an exemplary embodiment, the alkylene oxide derived polymer is a random copolymer of ethylene oxide and propylene oxide, such as a linear ethylene oxide/propylene oxide copolymer.

In an exemplary embodiment of the present disclosure, the polymerization is carried out in a cascade of a fluidized-bed reactor and a multizone circulating reactor and the polymerization reactors are operated with different polymerization conditions and especially with different concentrations of molecular weight regulator such as hydrogen. Accordingly, a lower molecular weight polyolefin polymer component is obtained in the polymerization with the higher hydrogen concentration reactor and a higher molecular weight polyolefin polymer component is obtained in the polymerization with the lower hydrogen concentration reactor. Preferably, a lower molecular weight polyolefin polymer component is obtained in the fluidized-bed reactor and a higher molecular weight polyolefin polymer component is obtained in the multizone circulating reactor. Thus, the fluidized-bed reactor can be operated with a higher concentration of hydrogen producing a lower molecular weight polyolefin polymer component and the multizone circulating reactor is may be operated with a lower concentration of hydrogen producing a higher molecular weight polyolefin polymer component. Polyolefin polymers prepared in the process of the present disclosure may be polyethylenes having a MFR_{21.6} according to DIN EN ISO 1133:2005 at a temperature of 190 °C under a load of 21.6 kg in the range of from 0.5 g/10 min to 350 g/10 min, more preferably either in the range of from 1.0 g/10 min to 40 g/10 min or from 120 g/10 min to 250 g/10 min and especially preferred are polyethylenes having a MFR_{21.6} in the range of from 1.2 g/10 min to 35 g/1 0 min and in particular of from 1.5 g/10 min to 10 g/10 min. The density may be in the range of from 0.935 g/cm³ to 0.970 g/cm³. In some embodiments and more preferably in the range of from 0.945 g/cm³ to 0.968 g/cm³.

The process of the present disclosure may be for the homopolymerization of ethylene or copolymerization of ethylene and up to 20 wt.-% of C₃-C₈-1-alkenes.

The process of the present disclosure may serve for preparing polyethylenes in a polymerization reactor cascade, in which a fluidized-bed reactor is arranged upstream of a multizone circulating reactor, and where an ethylene homopolymer or ethylene copolymer, which has a MFR_{2.16} according to DIN EN ISO 1133:2005 at a temperature of 190 °C under a load of 2.16 kg in the range of from 0.1 g/10 min to 300 g/10 min and more preferably of from 1 g/10 min to 100 g/10 min, is produced in the fluidized-bed reactor.

The process of the present disclosure provides a possibility for preparing a polyolefin polymer by gas-phase polymerization in a polymerization reactor cascade comprising a fluidized-bed reactor and a multizone circulating reactor, in which the formation of polymer agglomerates in the polymerization reactors and fluctuations in the fluid-dynamics of the multizone circulating reactor are prevented or at least strongly reduced.

In another aspect, the present disclosure provides a gas-phase polymerization apparatus for carrying out the process of the present disclosure, the gas-phase polymerization reactor comprising a gas-phase polymerization reactor and at least one pipe, the pipe being equipped with at least one inlet for introducing an antistatic agent into the pipe.

In an exemplary embodiment, the pipe comprises a receiving end for receiving a mixture of polyolefin particles and gas and a discharge end for discharging a mixture of polyolefin particles and gas wherein the at least one inlet with the first half, in particular within the first third of the pipe from the receiving end of the pipe. Such a distance between receiving end and inlet was found to lead to a particular good distribution of the antistatic agent on the polymer particles, resulting in reduced wall sheeting and agglomeration of the polymer particles.

The present disclosure will be described in more detail with reference to Figure 1 without being understood as limiting the scope and spirit of the present disclosure.

Figure 1 shows schematically a set-up of an exemplary embodiment of a polymerization reactor cascade comprising a fluidized-bed reactor and a multizone circulating reactor for carrying out the process of the present disclosure wherein the arrows depict exemplary points of introduction for the antistatic agent.

The first gas-phase reactor, fluidized-bed reactor (1), comprises a fluidized bed (2) of polyolefin particles, a gas distribution grid (3) and a velocity reduction zone (4). The velocity reduction zone (4) is of increased diameter compared to the diameter of the fluidized-bed portion of the reactor. The polyolefin bed is kept in a fluidization state by an upwardly flow of gas fed through the gas distribution grid (3) placed at the bottom portion of the reactor (1). The gaseous stream of the reaction gas leaving the top of the velocity reduction zone (4) via recycle line (5) is compressed by compressor (6), transferred to a heat exchanger (7), in which the stream is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, also inert condensable gases, such as alkanes, as well as inert non-condensable gases, such as nitrogen. Make-up monomers, molecular weight regulators, and optional inert gases or process additives can be fed into the reactor (1) at various positions, for example via one or more lines (9) into recycle line (5) upstream of the compressor (6) or via line (9a) to the polymer bed within fluidized-bed reactor (1); this nonlimiting the scope of the disclosure. The catalyst may be fed into the reactor (1) via a line (10) that may be placed in the lower part of the fluidized bed (2).

The polyolefin particles obtained in fluidized-bed reactor (1 ) are discontinuously discharged via line (11) and fed to a solid/gas separator (12) in order to avoid that the gaseous mixture coming from fluidized-bed reactor (1) enters the second gas-phase reactor. Line (11) was found to be a good point of introduction for the antistatic agent. The gas leaving solid/gas separator (12) exits the reactor via line (13) as off-gas while the separated polyolefin particles are fed via line (14) to the second gas-phase reactor.

The second gas-phase reactor is a multizone circulating gas-phase reactor (31) with two reaction zones, riser (32) and downcomer (33), which are repeatedly passed by the polyolefin particles. Within riser (32), the polyolefin particles flow upward under fast fluidization conditions along the direction of arrow (34). Within downcomer (33) the polyolefin particles flow downward under the action of gravity along the direction of arrow (35). The riser (32) and the downcomer (33) are appropriately interconnected by the interconnection bends (36) and (37).

After flowing through the riser (32), the polyolefin particles and the gaseous mixture leave the riser (32) and are conveyed to a solid/gas separation zone (38). This solid/gas separation can be effected by using conventional separation means such as, for example, a centrifugal separator like a cyclone. From the separation zone (38) the polyolefin particles enter the downcomer (33).

The gaseous mixture leaving the separation zone (38) is recycled to the riser (32) by means of a recycle line (39), equipped with a compressor (40) and a heat exchanger (41). Downstream of the heat exchanger (41) the recycle line (39) splits and the gaseous mixture is divided into two separated streams: line (42) conveys a part of the recycle gas into the interconnection bend (37), while the line (43) conveys another part the recycle gas to the bottom of the riser (32), so as to establish fast fluidization conditions therein. The polyolefin particles coming from the first gas-phase reactor via line (14) enter the multizone circulating gas-phase reactor (31) at the interconnection bend (37) in position (44).

Make-up monomers, make-up comonomers, and optionally inert gases or process additives can be fed to the multizone circulating reactor (31) via one, two or more lines (45) or (46), suitably placed at any point of the gas recycle line (39) or the downcomer (33). A possible route for feeding process additives such as antistatic agents is further feeding the additives via line (47).

A part of the gaseous mixture leaving the separation zone (38) exits recycle line (39) after the compressor (40) and is sent through line (48) to heat exchanger (49) where the mixture is cooled to a temperature at which the monomers and the optional inert gas are partially condensed. A separating vessel (50) is placed downstream the heat exchanger (49). The separated gaseous mixture is recirculated through line (51) to recycle line (39) and the separated liquid is fed to the downcomer (33) through line (52) by means of pump (53).

The polyolefin particles obtained in the multizone circulating reactor (31) are continuously discharged from the bottom part of downcomer (33) via discharge line (54), which was found to be another good point of introduction for the antistatic agent.

By choosing discharge lines (11) and/or (54) as a point of introduction for the antistatic agent, in combination with conveying the mixture of polyolefin particles and gas with a velocity more or equal to 2 m/s, formation of wall sheeting and polymer agglomerates could be avoided without affecting the operability of the polymerization process.

## Claims

1. A process for the continuous production of a polyolefin polymer in a gas-phase polymerization apparatus at temperatures from 20 to 200 °C and pressures from 0.5 to 10 MPa in the presence of a polymerization catalyst, the process comprising the steps of
• providing a mixture of polyolefin particles and gas;
• conveying said mixture through a pipe at a gas velocity of more or equal than 2 m/s; and
• introducing an antistatic agent into said mixture.

2. The process of claim 1, **characterized in that** the density of the polyolefin particles in the gas is at least 30 kg/m³, preferably at least 50 kg/m³, more preferably at least 80 kg/m³.

3. The process of any of the forgoing claims, **characterized in that** the pipe is a discharge line and/or transfer line.

4. The process of any of the forgoing claims, **characterized in that** the process further comprises the steps of
• feeding an olefin or an olefin and one or more other ethylenically unsaturated monomers into a gas-phase polymerization reactor;
• homopolymerizing the olefin or copolymerizing the olefin and the one or more other ethylenically unsaturated monomer in the gas-phase reactor in the presence of a polymerization catalyst;
• discharging the formed polyolefin particles from the gas-phase reactor.

5. The process of any of the forgoing claims, **characterized in that** the gas-phase polymerization apparatus comprises two or more gas-phase polymerization reactors, preferably a sequence of a fluidized bed reactor and a multi zone circulating reactor.

6. The process of any of the forgoing claims, **characterized in that** the antistatic agent comprises an alkylene oxide derived polymer

7. The process of claim 6, **characterized in that** the alkylene oxide derived polymer is a random copolymer of ethylene oxide and propylene oxide, preferably a linear ethylene oxide/propylene oxide copolymer.

8. The process of any of the forgoing claims, **characterized in that** the antistatic agent is introduced into the mixture of gas and polyolefin in a feed of a liquid carrier wherein the weight ratio of antistatic agent to liquid carrier in the combined stream introduced into the pipe is preferably in the range from 1:5000 to 1:10.

9. The process of claim 8, **characterized in that** the liquid carrier is selected from the group consisting of water, liquid hydrocarbons, preferably those having from 3 to 8 carbon atoms, such as propane.

10. The process of any of the forgoing claims, **characterized in that** the polymerization is carried out in a polymerization reactor cascade comprising a fluidized-bed reactor and a multizone circulating reactor, in which multizone circulating reactor the growing polymer flow upward through a first polymerization zone under fast fluidization or transport conditions, leave said first polymerization zone and enter a second polymerization zone through which the particles flow downward under the action of gravity, leave said downcomer and are reintroduced into the riser, thus establishing a circulation of polymer, and the fluidized-bed reactor is arranged upstream of the multizone circulating reactor.

11. The process of claim 10, **characterized in that** a lower molecular weight polyolefin polymer component is obtained in the fluidized-bed reactor and a higher molecular weight polyolefin polymer component is obtained in the multizone circulating reactor.

12. The process of any of the forgoing claims, **characterized in that** the polyolefin polymer is a polyethylene prepared by homopolymerizing ethylene or copolymerizing ethylene and up to 10 wt.% of C₃-C₈-1-alkenes.

13. A gas-phase polymerization apparatus for carrying out a process of any of claims 1 to 12, comprising a gas-phase polymerization reactor and at least one pipe, **characterized in that** the pipe comprises at least one inlet for introducing an antistatic agent into the pipe.

14. The apparatus of claim 13, **characterized in that** the pipe comprises a receiving end for receiving a mixture of polyolefin particles and gas and a discharge end for discharging a mixture of polyolefin particles and gas wherein the at least one inlet is located within the first half, preferably within the first third of the pipe from the receiving end of the pipe.
